# EUROPEAN PATENT APPLICATION

(11) **EP 4 836 424 A1**
(43) Date of publication of application: **04.11.2026**
(21) Application number: 25224184.9
(22) Date of filing: 17.12.2025
(51) Int. Cl.: H04N 21/262, H04N 21/472, H04N 21/482

(54) **MEDIA PLAYING METHOD, ELECTRONIC DEVICE, AND STORAGE MEDIUM**

(30) Priority: 30.04.2025 CN 202510572860
(71) Applicant: Beijing Zitiao Network Technology Co., Ltd., Beijing 100190 (CN)
(72) Inventor: CAO, Peiyue, Beijing, 100028 (CN)
(74) Representative: Isarpatent

(57) **Abstract**

Embodiments of the present disclosure provide a media playing method, an electronic device, and a storage medium. The media playing method includes: presenting or playing a first media resource based on a first media interface; generating tag information of the first media resource in response to a first trigger operation for the first media resource, the tag information being used to represent a playback progress of the first media resource when the tag information is generated; and inserting the first media resource into a to-be-played list, and resuming playback of the first media resource from a playback position corresponding to the playback progress represented by the tag information of the first media resource in response to playing to the first media resource based on the to-be-played list.

## Description

### CROSS-REFERENCE TO RELATED APPLICATION

This application claims priority to Chinese Patent Application No. 202510572860.0, filed on April 30, 2025, the entire disclosure of which is incorporated herein by reference as part of the present disclosure.

### TECHNICAL FIELD

Embodiments of the present disclosure relate to the field of Internet technologies, and in particular, to a media playing method, an electronic device, and a storage medium.

### BACKGROUND

At present, users' resource consumption time is characterized by fragmentation. For example, when users watch media resources pushed by a media platform through the media platform, it is often difficult to complete playing longer media resources within a time fragment, which makes it difficult for users to watch the full content of the media resources.

In the prior art, the media platform provides functions of history and favorites, and users may use the history or the favorites to retrieve and replay the media resources.

However, the solution in the prior art still has the problems of complicated operation process and low interaction efficiency in the process of retrieving and replaying the media resources, which affects users' use experience.

### SUMMARY

On the first aspect, embodiments of the present disclosure provide a media playing method, comprising: presenting or playing a first media resource based on a first media interface; generating tag information of the first media resource in response to a first trigger operation for the first media resource, the tag information being used to represent a playback progress of the first media resource when the tag information is generated; and inserting the first media resource into a to-be-played list, and resuming playback of the first media resource from a playback position corresponding to the playback progress represented by the tag information of the first media resource in response to playing to the first media resource based on the to-be-played list.

In at least an embodiment, the method further comprises: displaying a to-be-played list panel configured to present tag information of media resources in the to-be-played list, and display the tag information of the first media resource at a target sorting position in the to-be-played list panel.

In at least an embodiment, the method further comprises: adjusting a position of the tag information of the first media resource in the to-be-played list panel in response to a second trigger operation.

In at least an embodiment, the refreshing the to-be-played list panel to display the tag information of the first media resource at a target sorting position in the to-be-played list panel comprises: acquiring first content features of media resources corresponding to respective pieces of tag information in the to-be-played list and a second content feature of the first media resource; and determining the target sorting position according to the second content feature and the first content features, the second content feature of the first media resource having feature similarity and/or feature continuity with a first content feature of a media resource located at a position adjacent to the target sorting position.

In at least an embodiment, the method further comprises: displaying a to-be-played list panel, the to-be-played list panel being used to present tag information of media resources in the to-be-played list; and sequentially playing the media resources corresponding to respective pieces of tag information according to positions of the tag information presented in the to-be-played list panel.

In at least an embodiment, the displaying a to-be-played list panel comprises: displaying at least two to-be-played list panels respectively corresponding to different to-be-played lists; the sequentially playing the media resources corresponding to respective pieces of tag information according to positions of the tag information presented in the to-be-played list panel comprises: sequentially playing the media resources corresponding to respective pieces of tag information according to positions of the tag information presented in a target to-be-played list panel in response to a selection operation for the target to-be-played list panel.

In at least an embodiment, the inserting the first media resource into a to-be-played list comprises: determining a corresponding target tag list according to a target control type corresponding to the first trigger operation, and inserting the first media resource into the target tag list; and displaying a target tag list panel corresponding to the target tag list, and inserting the first media resource into the to-be-played list in response to a selection operation for the first media resource in the target tag list panel.

In at least an embodiment, the inserting the first media resource into the target tag list comprises: acquiring playback progress of respective media resources in the target tag list; and arranging positions of the respective media resources in the target tag list according to the playback progress of the respective media resources, wherein the greater the playback progress, the higher a corresponding media resource is ranked in the target tag list.

In at least an embodiment, the tag information is also used to represent abstract information of the first media resource; and the generating the tag information of the first media resource in response to a first trigger operation for the first media resource comprises: acquiring a current first playback progress of the first media resource in response to the first trigger operation for the first media resource; acquiring a media resource content slice corresponding to the current first playback progress in the first media resource; and performing semantic understanding on the media resource content slice corresponding to the first current playback progress to generate the abstract information, and generating the tag information according to the abstract information.

In at least an embodiment, after the presenting or playing a first media resource based on a first media interface, the method further comprises: displaying prompt information in the first media interface when the first media resource is played to a key playback progress, wherein the prompt information is used to instruct a user to apply the first trigger operation, and the key playback progress is used to indicate a start playback position corresponding to key content of the first media resource or a playback position corresponding to a boundary point between two independent segments of content in the first media resource.

In at least an embodiment, the method further comprises: acquiring a real-time content feature corresponding to audio and video decoding data after a current playback progress of the first media resource in real time; and determining the key playback progress of the first media resource according to the real-time content feature.

In at least an embodiment, the method further comprises: adjusting a position of the tag information of the first media resource in the to-be-played list panel in response to a second trigger operation.

In at least an embodiment, the tag information is further used to represent a media resource identification of the first media resource.

On the second aspect, embodiments of the present disclosure provide an electronic device, comprising: a processor and a memory. The memory stores a computer-executable instruction which, when executed by the processor, causes a media playing method to be performed and the media playing method comprises: presenting or playing a first media resource based on a first media interface; generating tag information of the first media resource in response to a first trigger operation for the first media resource, the tag information being used to represent a playback progress of the first media resource when the tag information is generated; and inserting the first media resource into a to-be-played list, and resuming playback of the first media resource from a playback position corresponding to the playback progress represented by the tag information of the first media resource in response to playing to the first media resource based on the to-be-played list.

On the third aspect, embodiments of the present disclosure provide a non-transitory computer-readable storage medium, storing a computer-executable instruction which, when executed by a processor, causes a media playing method to be performed and the media playing method comprises: presenting or playing a first media resource based on a first media interface; generating tag information of the first media resource in response to a first trigger operation for the first media resource, the tag information being used to represent a playback progress of the first media resource when the tag information is generated; and inserting the first media resource into a to-be-played list, and resuming playback of the first media resource from a playback position corresponding to the playback progress represented by the tag information of the first media resource in response to playing to the first media resource based on the to-be-played list.

On the fourth aspect, embodiments of the present disclosure provide a media playing apparatus, including: a display module, configured to present or play a first media resource based on a first media interface; a tagging module, configured to generate tag information of the first media resource in response to a first trigger operation for the first media resource, the tag information being used to represent a playback progress of the media resource when the tag information is generated; and a playing module, configured to insert the first media resource into a to-be-played list, and resume playback of the first media resource from a playback position corresponding to the playback progress represented by the tag information of the first media resource in response to playing to the first media resource based on the to-be-played list.

On the fifth aspect, embodiments of the present disclosure provide a computer program product, including a computer program which, when executed by a processor, the media playing method according to the above first aspect and various possible designs of the first aspect is implemented.

### BRIEF DESCRIPTION OF DRAWINGS

In order to more clearly explain the technical solutions in the embodiments of the present disclosure or in the prior art, the following will briefly introduce the drawings that need to be used in the description of the embodiments or the prior art. Obviously, the drawings in the following description are some embodiments of the present disclosure. For those of ordinary skill in the art, other drawings may be obtained based on these drawings without paying creative efforts.
Fig. 1 is an application scenario diagram of a media playing function provided by an embodiment of the present disclosure;
Fig. 2 is a first schematic flowchart of a media playing method provided by an embodiment of the present disclosure;
Fig. 3 is a schematic diagram of a to-be-played list panel provided by an embodiment of the present disclosure;
Fig. 4 shows steps of determining a target sorting position provided by an embodiment of the present disclosure;
Fig. 5 is a schematic diagram of a process relationship of adjusting a to-be-played list provided by an embodiment of the present disclosure;
Fig. 6 is a second schematic flowchart of a media playing method provided by an embodiment of the present disclosure;
Fig. 7 is a flowchart of a specific implementation of step S202 in the embodiment shown in Fig. 6;
Fig. 8 is a schematic diagram of a tag list panel provided by an embodiment of the present disclosure;
Fig. 9 is a schematic diagram of a process of inserting a media resource into a to-be-played list provided by an embodiment of the present disclosure;
Fig. 10 is a structural block diagram of a media playing apparatus provided by an embodiment of the present disclosure;
Fig. 11 is a schematic structural diagram of an electronic device provided by an embodiment of the present disclosure; and
Fig. 12 is a schematic diagram of a hardware structure of an electronic device provided by an embodiment of the present disclosure.

### DETAILED DESCRIPTION

In order to make the objectives, technical solutions, and advantages of the embodiments of the present disclosure clearer, the technical solutions in the embodiments of the present disclosure will be described clearly and comprehensively with reference to the drawings in the embodiments of the present disclosure. Obviously, the described embodiments are part of the embodiments of the present disclosure, rather than all of them. All other embodiments obtained by those of ordinary skill in the art based on the embodiments of the present disclosure without paying creative efforts shall fall within the protection scope of the present disclosure.

It should be noted that the user information (including but not limited to user device information, user personal information, etc.) and data (including but not limited to data for analysis, stored data, displayed data, etc.) involved in the present disclosure are information and data authorized by the user or fully authorized by all parties, and the collection, use, and processing of relevant data need to comply with relevant laws, regulations, and standards of relevant countries and regions, and provide corresponding operation entry for the user to choose authorization or rejection.

The following explains the application scenarios of the embodiments of the present disclosure.

The media playing method provided by the embodiments of the present disclosure may be applied to applications (APPs) with a media playing function, such as short video applications, audiobook applications, etc. More specifically, it may be applied to an application scenario of media pushing and playing based on an information flow (feed flow). The execution body of the embodiments may be a terminal device running the above-mentioned application with the media playing function, a server deploying a server end corresponding to the above-mentioned application, or other electronic devices with similar functions. When the execution body is a terminal device, the terminal device executes the method provided by the embodiments by running the above-mentioned application; when the execution body is a server, the server end of the above-mentioned application with the media playing function may run partially or completely on the server, and the method provided by the embodiments is executed on the server end side, while the terminal device runs the client of the application, and the server and the terminal device communicate based on the server-client architecture, so that the terminal device may obtain the execution result of the method provided by the embodiments and display it according to the needs.

In some embodiments, the terminal device or the server may implement the media playing function provided by the embodiments of the present disclosure by running various computer-executable instructions or computer programs. For example, the computer-executable instructions may be program-level commands, machine instructions, or software instructions. The computer program may be a native program or a software module in an operating system; may be a local application, that is, a program that needs to be installed in the operating system to run, or may be a mini-program embedded in any APP, that is, a program that runs based on a browser environment. In summary, the above computer-executable instructions may be any form of instructions, and the above computer program may be any form of applications, modules, or plugins, and the specific implementation may be configured according to the needs. Further, in the process of implementing the media playing function provided by the embodiments of the present disclosure, the terminal device may execute the method by running computer-executable instructions or computer programs set locally, or may execute the method by calling computer-executable instructions or computer programs set in an external server. In some embodiments, the server may be an independent physical server, a server cluster or a distributed system composed of multiple physical servers, or a cloud server that provides basic cloud computing services such as cloud services, cloud storage, cloud communication, cloud databases, cloud computing, cloud functions, network services, middleware services, domain name services, security services, content delivery networks (Content Delivery Network, CDN), and big data and artificial intelligence platforms, where the cloud services may be interactive processing services for the terminal device to call.

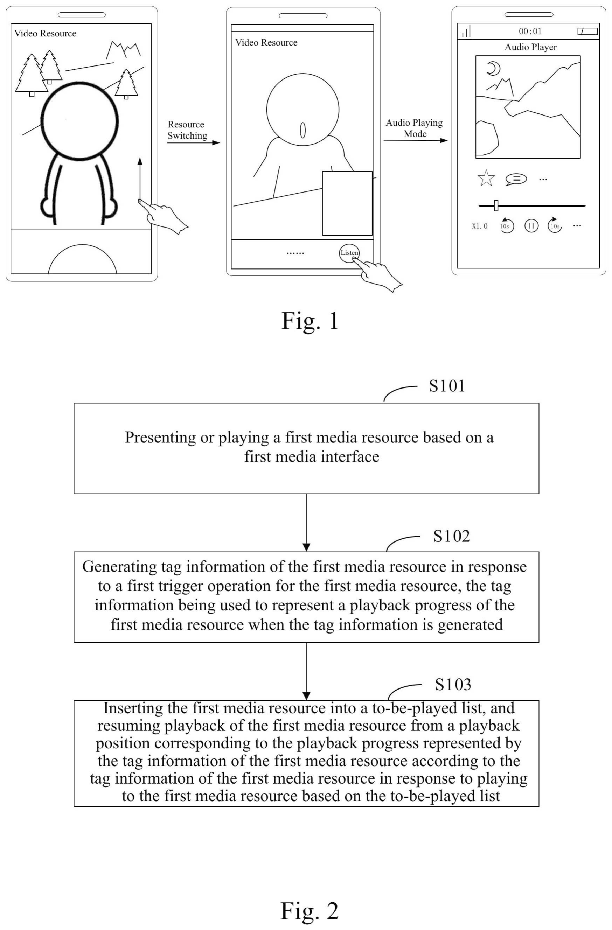

Fig. 1 is an application scenario diagram of a media playing function provided by an embodiment of the present disclosure. Referring to Fig. 1, taking a terminal device as an example, a target application with a media playing function, such as a short video application that pushes videos based on a feed flow, runs in the terminal device. While watching video resources (media resources) through the target application, a user may also operate the terminal device to perform operations such as pausing/playing, progress jumping, and resource switching, for example, switching the currently played video resource by sliding the screen up and down. In a possible implementation, the target application may also be switched to an audio playing mode (such as an "audiobook mode"). In this mode, the target application plays audio content of a video resource through an audio player to meet the user's need to listen to the audio content of the video.

In the above application scenario, for a media resource with a long duration, since it cannot be played completely within a time fragment (for example, a 10-minute break between classes and a 5-minute waiting time for a bus), the user has a need to save the media resource that he/she is interested in and that has not been completely played, and continue watching or listening to it in a subsequent time fragment. For such a need, the media resource is usually recorded and saved by providing a history and favorites. However, the above solution cannot accurately record the playback progress, and in this situation, when retrieving the media resource, it may only play according to the selected media resource, that is, it may only perform an operation mode of selecting one and playing one at a time, but cannot implement queue playing, resulting in a complicated operation process and low interaction efficiency, which affects the user experience.

An embodiment of the present disclosure provides a media playing method to solve the above problems.

Referring to Fig. 2, Fig. 2 is a first schematic flowchart of a media playing method provided by an embodiment of the present disclosure. The method of the embodiment may be applied to a terminal device or a server. For the case where the terminal device executes the method provided by the embodiment, in a possible implementation, the terminal device may implement the media playing method provided by the embodiment by executing program codes deployed locally. In another possible implementation, the server may be configured to deploy a functional service implemented based on the media playing method provided by the embodiment, and the terminal device may access the above server and call the corresponding functional service to implement the media playing method provided by the embodiment. Exemplarily, the media playing method provided by the embodiment includes the following steps.

Step S101: presenting or playing a first media resource based on a first media interface.

Step S102: generating tag information of the first media resource in response to a first trigger operation for the first media resource, the tag information being used to represent a playback progress of the first media resource when the tag information is generated. For example, the tag information is further used to represent a media resource identification of the first media resource.

Step S103: inserting the first media resource into a to-be-played list, and resuming playback of the first media resource from a playback position corresponding to the playback progress represented by the tag information of the first media resource according to the tag information of the first media resource in response to playing to the first media resource based on the to-be-played list.

Referring to the schematic diagram of the application scenario shown in Fig. 1, in the embodiment, a terminal device is used as an execution body to introduce the provided media playing method. Exemplarily, the terminal device runs a target application and provides a media playing function to a user through the target application, and the user presents or plays a first media resource through a first media interface of the target application, where the first media interface is, for example, a media playing interface of the target application, and relevant controls and buttons (such as play, pause, fast forward, next, etc.) of a media player are set in this interface. The first media resource may be a video resource or an audio resource. When the first media resource is a video resource, a corresponding video picture is played in the first media interface; and when the first media resource is an audio resource, relevant information corresponding to the first media resource, such as a title, an author, a chapter, content text, and a cover page, is displayed in the first media interface. The first media resource in the first media interface may be in a playing or non-playing (for example, paused) state, that is, the first media resource is presented or played based on the first media interface, which is not limited here.

Further, after presenting or playing the first media resource based on the first media interface, tag information of the first media resource is generated in response to a first trigger operation for the first media resource, such as a trigger operation for a "tag control" set in the first media interface. **In** a possible implementation, the tag information includes a media resource identification that represents a media resource, such as a title of the first media resource; the tag information further includes time information that represents a playback progress of the media resource when the first trigger operation is responded to, that is, a playback progress of the first media resource at the time of generating the tag information. The time information that represents the playback progress of the media resource may be represented by a percentage value or a specific timestamp. The above step of generating the tag information is a process of "tagging" the first media resource. By generating the tag information, the first media resource and the playback progress of the first media resource at the "tagging time" are recorded, so that fast resuming playback of the first media resource may be completed based on the tag information in a subsequent step.

After the tag information is generated, the tagging process of the first media resource is completed. After that, when the user needs to retrieve and replay the first media resource, the terminal device inserts the first media resource into a to-be-played list in response to a user operation. The to-be-played list is a list for storing media resources to be played in the target application. **In** an application scenario of media playing based on a feed flow, the target application plays the media resources in the to-be-played list sequentially through the first media interface (media playing interface), and receives feed flow media resources pushed by a server and adds the feed flow media resources to the to-be-played list sequentially. There are various implementations of inserting the first media resource into the to-be-played list. In a possible implementation, after the tag information of the first media resource is generated, the first media resource is automatically inserted into a target sorting position in the to-be-played list, such as the end of the to-be-played list. In another possible implementation, the terminal device inserts the first media resource into the to-be-played list in response to a user operation. For example, the first media resource is inserted into the first position of the to-be-played list, that is, a position to be played with the highest priority, and when a current media being played in the first media interface of the target application is completed, the first media resource is continuously played; for another example, the terminal device inserts the first media resource into the end of the to-be-played list, that is, a position to be played last, in response to a user operation, and the first media resource is played only after all other media resources before the first media resource in the to-be-played list are completely played sequentially. Certainly, in other possible implementations, the first media resource may also be located at other positions in the to-be-played list, which will not be repeated here.

Further, a to-be-played list panel corresponding to the to-be-played list may be presented to respond to the above user operation, and then the user manually inserts the first media resource into the to-be-played list. In a possible implementation, the embodiment further includes at least one of the following steps.

Step S100A: displaying the to-be-played list panel, the to-be-played list panel being used to present tag information of media resources in the to-be-played list.

Step S100B: playing, in sequence based on positions of respective pieces of tag information presented in the to-be-played list panel, media resources corresponding to the respective pieces of tag information based on the respective pieces of tag information.

Step S100C: adjusting a position of the tag information of the first media resource in the to-be-played list panel in response to a second trigger operation.

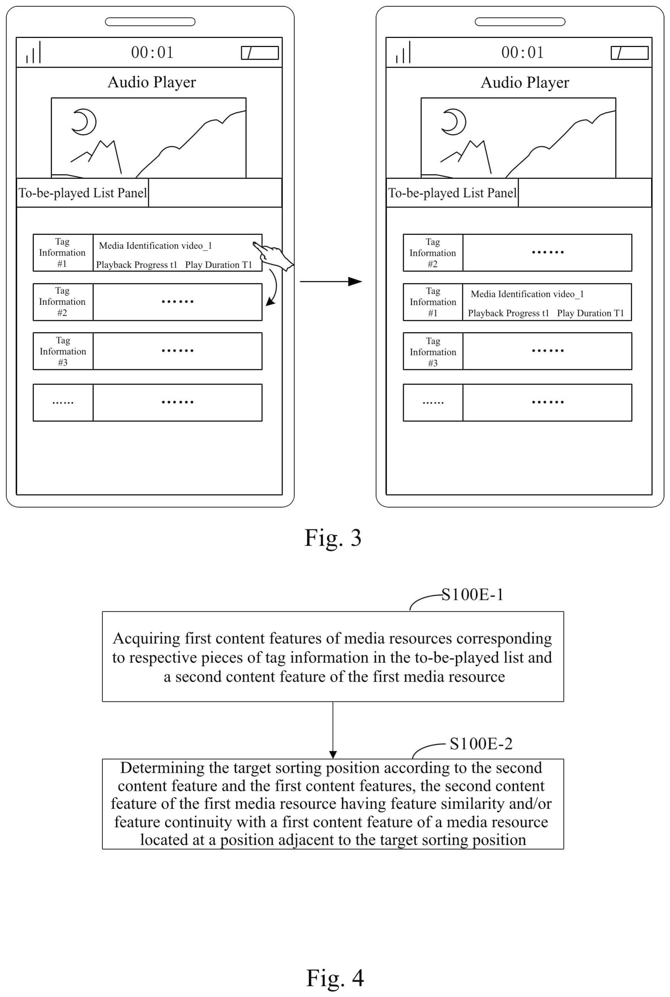

Fig. 3 is a schematic diagram of a to-be-played list panel provided by an embodiment of the present disclosure. As shown in Fig. 3, tag information #1, tag information #2, and tag information #3 are displayed in the to-be-played list panel, where each piece of tag information corresponds to a different media resource that constitutes the to-be-played list. Taking the tag information #1 as an example, the tag information #1 includes a media identification video_1 for identifying the first media resource and a corresponding playback progress t1. Optionally, the to-be-played list panel further includes a play duration of the media resource, for example, a play duration of the media resource corresponding to the media identification video_1 is T1. In short, the to-be-played list panel is a container for presenting the to-be-played list, and the terminal device plays corresponding media resources according to an order of each piece of tag information displayed in the to-be-played list panel, that is, plays, in sequence based on the positions of respective pieces of tag information presented in the to-be-played list panel, the media resources corresponding to the respective pieces of tag information based on the respective pieces of tag information. On this basis, the terminal device may adjust the position of the tag information of the first media resource in the to-be-played list panel by receiving and responding to a second trigger operation input by the user. For example, as shown in Fig. 3, the tag information #1 of the first media resource and the tag information #2 may be swapped based on the second trigger operation (drag-and-drop operation), thereby adjusting a playing order of the first media resource.

After that, the terminal device plays media items in the to-be-played list sequentially according to the to-be-played list. After the first media resource is inserted into the to-be-played list and when playing to the first media resource based on the to-be-played list, the terminal device acquires the previously generated tag information of the first media resource and resumes playback of the first media resource from a playback position corresponding to the playback progress represented by the tag information of the first media resource. For example, the first media resource is played continuously from a playing timestamp 3:00 (3 minutes) of the first media resource, and the playing timestamp 3:00 is the playback progress of the first media resource when the tag information was previously generated. Through the above steps, non-instantaneous queue playing of the first media resource may be realized, and the playback progress is consistent with the progress when the tag information was previously generated, thereby achieving the purpose of simplifying operation steps and avoiding repeated operations, and improving interaction efficiency.

In a possible embodiment, after the first media resource is inserted into the to-be-played list, the method further includes the following step.

Step S100D: refreshing the to-be-played list panel to display the tag information of the first media resource at a target sorting position in the to-be-played list panel.

Exemplarily, in combination with the previous introduction of relevant steps of displaying the to-be-played list panel, the to-be-played list panel may be a container/control for displaying the to-be-played list. After the first media resource is inserted into the to-be-played list, since the to-be-played list changes, the content of the corresponding to-be-played list panel also changes. The terminal device refreshes the to-be-played list panel to display the tag information of the first media resource at a target sorting position in the to-be-played list panel, that is, to display the tag information corresponding to the first media resource in the to-be-played list panel, so as to prompt the user that the first media resource has been successfully inserted into the to-be-played list. Then, steps such as adjusting the playing order of the first media resource through the to-be-played list panel may be performed.

Further, regarding the target sorting position in step S100D, in a possible implementation, the target sorting position may be consistent with a position of the first media resource in the to-be-played list, that is, the target sorting position in the to-be-played list panel is determined according to the position of the first media resource in the to-be-played list, thereby achieving the technical effect of the content displayed by the to-be-played list panel is the content of the to-be-played list. **In** another possible implementation, the content displayed in the to-be-played list panel is a result of sorting and optimizing the to-be-played list. Specifically, the step S100D includes a step of determining the target sorting position. Exemplarily, as shown in Fig. 4, the step includes the following steps.

Step S100E-1: acquiring first content features of media resources corresponding to respective pieces of tag information in the to-be-played list and a second content feature of the first media resource.

Step S100E-2: determining the target sorting position according to the second content feature and the first content features, the second content feature of the first media resource having feature similarity and/or feature continuity with a first content feature of a media resource located at a position adjacent to the target sorting position.

Exemplarily, first, according to the media resources corresponding to respective pieces of tag information currently recorded in the to-be-played list, content features corresponding to the respective media resources, that is, the first content features, are acquired respectively, where the content feature is a feature expression that represents the resource content of the media resource, and the content feature may be implemented in the form of a feature type identification, a feature vector, a feature matrix, etc. The first content feature is a content feature of the resource content of the media resource corresponding to each piece of tag information currently recorded in the to-be-played list. Similarly, the second content feature is a content feature of the resource content of the first media resource. The above content features (the first content features and the second content feature) may be obtained by parsing image content of the corresponding media resource, and may also be obtained by parsing text description information such as a title and an abstract corresponding to the media resource. A specific parsing manner may be implemented by a pre-trained image processing model and text processing model, which will not be repeated here. After that, the target sorting position is determined according to the obtained first content features and the second content feature. For example, by calculating feature similarity and content semantic coherence between the first content features and the second content feature, a first content feature that is closest to and/or most semantically coherent with the second content feature that represents the content of the first media resource is determined as a target first content feature, that is, the first content feature of the media resource located at the position adjacent to the target sorting position; after that, a position adjacent to the position where the media resource corresponding to the target first content feature is located, that is, an upper position or a lower position of the media resource, is determined as the target sorting position, and the first media resource is inserted into the target sorting position. Since a feature distance between the target first content feature and the second content feature is short, content similarity and/or content coherence between the first media resource at the target sorting position and the media resource corresponding to the target first content feature at the adjacent position may be achieved, thereby achieving the effect of content clustering, and achieving the effect of continuous playing of similar content when playing is performed based on the to-be-played list.

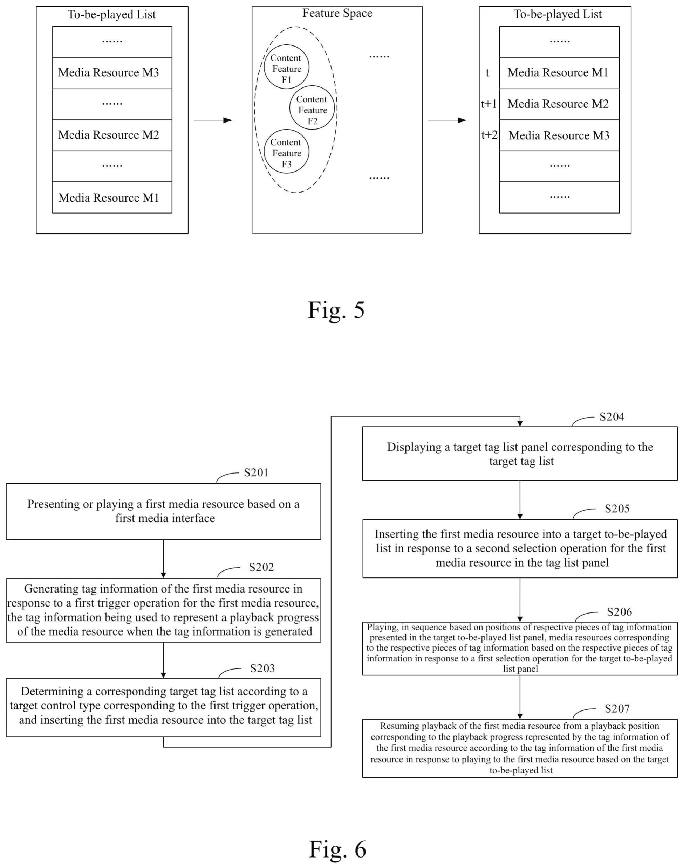

Fig. 5 is a schematic diagram of a process relationship of adjusting a to-be-played list provided by an embodiment of the present disclosure. The process of determining a target sorting position is introduced below in combination with Fig. 5. As shown in Fig. 5, first, the to-be-played list includes a series of media resources pushed by a server and manually added by a user, such as a media resource M1, a media resource M2, and a media resource M3, etc. The media resource M2 is the first media resource, and its content is "episode three of TV drama A". The content of the media resource M1 is "episode two of TV drama A", and the content of the media resource M3 is "episode four of TV drama A". **In** this case, by acquiring a content feature F2 (second content feature) of the media resource M2, a content feature F1 (first content feature) of the media resource M1, a content feature F3 (first content feature) of the media resource M3, and content features (first content features) of other media resources, and calculating and clustering feature similarity and feature continuity, the content feature F1, the content feature F2, and the content feature F3 are determined as features having feature continuity in a feature space; further, the media resource M1 corresponding to the content feature F1 is configured at the t-th position of the to-be-played list, the media resource M2 corresponding to the content feature F2 is configured at the (t+1)th position of the to-be-played list, and the media resource M3 corresponding to the content feature F3 is configured at the (t+2)th position of the to-be-played list. Thus, automatic arrangement and automatic sequential playing of related and similar media in the to-be-played list are realized, and interaction efficiency is improved.

In the embodiments, a first media resource is presented or played based on a first media interface; tag information of the first media resource is generated in response to a first trigger operation for the first media resource, the tag information being used to represent a media resource identification of a media resource and playback progress of the media resource when the tag information is generated; the first media resource is inserted into a to-be-played list, and when playing to the first media resource based on the to-be-played list, the first media resource is played continuously from playback progress corresponding to the tag information of the first media resource according to the tag information of the first media resource. By tagging the first media resource to generate the tag information and combining the to-be-played list, fast resumption of playback of the first media resource after playing interruption is realized, and the playback progress is kept consistent, so that a user may retrieve and replay the media resource quickly and accurately, and interaction efficiency and user experience are improved.

Referring to Fig. 6, Fig. 6 is a second schematic flowchart of a media playing method provided by an embodiment of the present disclosure. On the basis of the embodiment shown in Fig. 2, this embodiment further details step S103 and adds related technical features of a target tag list. The media playing method includes the following steps.

Step S201: presenting or playing a first media resource based on a first media interface.

Optionally, after step S201, the method further includes step S201A: displaying prompt information in the first media interface when the first media resource is played to a key playback progress, wherein the prompt information is used to instruct a user to apply a first trigger operation, and the key playback progress is used to indicate a start playback position corresponding to key content of the first media resource or a playback position corresponding to a boundary point between two independent segments of content in the first media resource.

Exemplarily, after the terminal device runs the target application and presents or plays the first media resource through the first media interface of the target application, in a possible implementation, a user may manually trigger the tagging process for the first media resource as needed, that is, apply the first trigger operation to generate the tag information of the first media resource. The first trigger operation is, for example, clicking controls such as "add to favorites" and "like".

In another possible implementation, based on the resource content of the first media resource, the terminal device may pop up the prompt information when the first media resource is played to the key playback progress, so as to prompt the user to perform tagging at the playback progress recommended by the target application, and generate tag information with a better content boundary point. Specifically, in a possible implementation, the terminal device may acquire the key playback progress of the first media resource in advance before playing the first media resource, the key playback progress may be a numerical value indicating a playback progress percentage or a playing timestamp, and the key playback progress is used to indicate a start playback position corresponding to the key content of the first media resource, or a playback position corresponding to a boundary point between two independent segments of content in the first media resource. When the first media resource is played to the key playback progress, the prompt information is displayed in the first media interface, for example, indicative effects such as highlighting effects and animation effects, or prompt text, that is, the prompt information, is displayed at controls named "add to favorites" and "listen later", thereby guiding and instructing the user to apply the first trigger operation to tag the first media resource at the current playback progress. When the playback of the first media resource is resumed subsequently, the integrity of the playing content of the first media resource may be ensured.

The above key playback progress may be generated in advance manually or by automatic content recognition. For example, the terminal device may directly acquire the key playback progress from feed flow data pushed by the server. The key playback progress may also be obtained by the terminal device after performing content parsing, feature recognition and classification on the whole first media resource after acquiring the first media resource, which is not limited here.

Further, in another possible implementation of determining the key playback progress, the terminal device performs real-time processing on the first media resource in the process of playing the first media resource, determines whether the current playback progress is the key playback progress, and displays the prompt information after determining that the current playback progress is the key playback progress. In a possible implementation, the method provided by the embodiment further includes: acquiring a real-time content feature of audio and video decoding data after a current playback progress of the first media resource in real time; and determining the key playback progress of the first media resource according to the real-time content feature. Specifically, in the process of playing the first media resource, the terminal device periodically acquires decoded audio and video decoding data to be played after the current playback progress of the first media resource, and then performs feature extraction based on a picture feature and a sound feature in the audio and video decoding data to be played to obtain the real-time content feature; after that, based on the real-time content feature, it is determined whether a current video clip contains important information and whether it is new independent content, and if so, the current playback progress is determined as the key playback progress of the first media resource, and then the prompt information is displayed in the first media interface. In the steps of the embodiments, the decoded audio and video decoding data is used to analyze the content feature, thereby realizing the judgment of the key playback progress. Compared with the solution of decoding the full content of the first media resource in advance and then performing feature extraction, there is no need to perform an additional decoding on the first media resource, computing resources are fully utilized, computing resource overhead is reduced, and processing efficiency is improved.

Step S202: generating tag information of the first media resource in response to a first trigger operation for the first media resource, the tag information being used to represent a playback progress of the media resource when the tag information is generated. For example, the tag information is further used to represent a media resource identification of the first media resource.

Exemplarily, after receiving the first trigger operation for the first media resource, the terminal device generates the tag information of the first media resource based on the media resource identification of the first media resource and a current playback progress of the first media resource. In a possible implementation, the tag information is also used to represent abstract information corresponding to the media resource, and the abstract information may be pre-generated. The terminal device may obtain the abstract information while acquiring the media resource identification of the first media resource from the feed flow data. In another possible implementation, the abstract information is generated by the terminal device after performing content recognition on the first media resource.

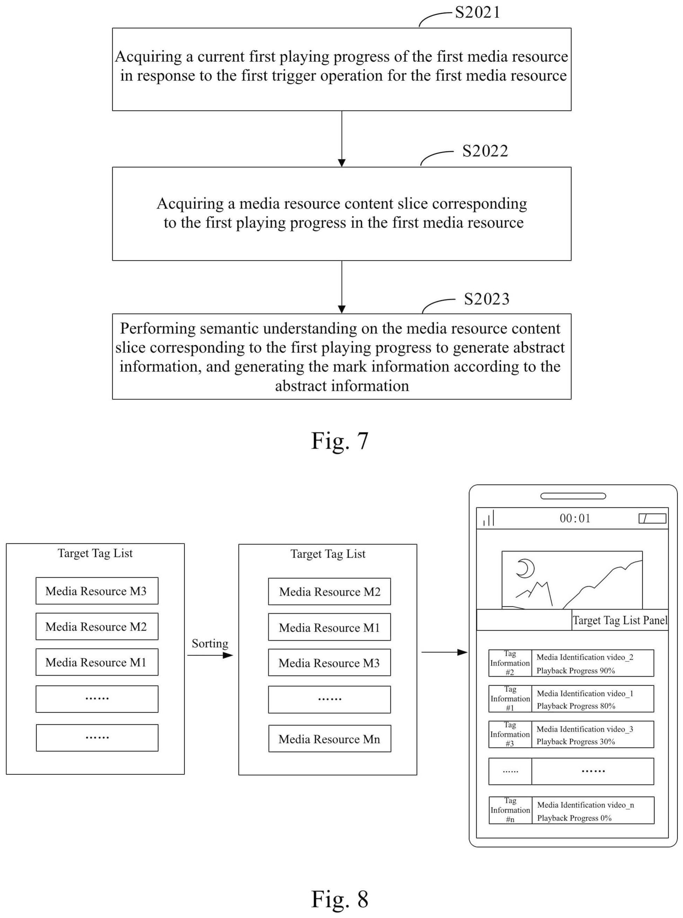

As shown in Fig. 7, exemplarily, a specific implementation of step S202 includes the following steps.

Step S2021: acquiring a current first playback progress of the first media resource in response to the first trigger operation for the first media resource.

Step S2022: acquiring a media resource content slice corresponding to the first playback progress in the first media resource.

Step S2023: performing semantic understanding on the media resource content slice corresponding to the first playback progress to generate abstract information, and generating the tag information according to the abstract information.

Exemplarily, first, after responding to the first trigger operation for the first media resource, the terminal device obtains a current first playback progress of the first media resource, and acquires a corresponding media resource content slice according to the first playback progress. For example, the first playback progress is "0:30", that is, a playing timestamp of 0 minute and 30 seconds corresponding to the first media resource. After that, a group of pictures (GOP) corresponding to the playing timestamp is acquired, or images or sound data corresponding to a time interval with the playing timestamp as a midpoint and a preset duration as an interval length are acquired as the media resource content slice; after that, sound content, picture content and subtitle content in the above media resource content slice are extracted and semantically understood to generate abstract information that represents a content summary corresponding to the media resource content slice, and then the tag information is constructed based on the summary information, the media resource identification and the playback progress.

In the steps of the embodiment, the first media resource is parsed to generate the tag information containing the summary information, so that when the tag information is presented through the to-be-played list panel in a subsequent step, the content summary at the playback progress represented by the tag information may be presented, thereby enabling the user to more intuitively understand the content of the first media resource at the "tagged position", and improving the retrieval efficiency of the media resource.

Step S203: determining a corresponding target tag list according to a target control type corresponding to the first trigger operation, and inserting the first media resource into the target tag list.

Step S204: displaying a target tag list panel corresponding to the target tag list.

Exemplarily, tag controls for triggering a media tagging process are set in the first media interface, such as a "add to favorites" control, a "like" control, a "watch later" control, etc. Each of the above tag controls corresponds to a different tag list, and the tag list is a collection of tagged media resources. When more than two tag controls are set in the first media interface, there are more than two corresponding tag lists, for example, the "add to favorites" control corresponds to a "favorites list", and the "like" control corresponds to a "likes list". In this case, the terminal device determines a corresponding target tag list according to a target control type triggered by the first trigger operation, and inserts the first media resource into the target tag list. For example, when the user triggers the "add to favorites" control through a click operation, the first media resource is inserted into the "favorites list" (target tag list); and when the user triggers the "like" control through a click operation, the first media resource is inserted into the "likes list" (target tag list). Through the above steps, the purpose of tagging the first media resource as different types of resources to be played is achieved.

After that, the terminal device displays the target tag list panel corresponding to the above tag list by responding to a user operation. The tag list panel is similar in function and form to the to-be-played list panel, and the tag list panel is a container/component used to carry the tag list. In the tag list panel, tag information of multiple media resources, such as the media resource identification, the playback progress, and the abstract of the media resources, is displayed. The terminal device may display multiple tag list panels at the same time, or may display the target tag list panel corresponding to the target tag list. After that, by responding to a selection operation of the user, a certain media resource in the tag list panel, such as the first media resource in the target tag list panel, is inserted into the to-be-played list and displayed in the to-be-played list panel.

Further, in a possible implementation, before step S204, the method further includes the following step.

Step S204A: acquiring the playback progress of respective media resources in the target tag list.

Step S204B: sorting positions of the respective media resources in the target tag list according to the playback progress of the respective media resources in the target tag list, wherein the greater the playback progress, the higher a corresponding media resource is ranked in the target tag list.

Exemplarily, the respective media resources in the tag list may be sorted based on an order in which the media resources are inserted into the tag list, for example, the latest added media resource is ranked in the front row of the tag list. This order may also be adjusted in response to a user operation. In a possible implementation, the terminal device may also sort the positions of the respective media resources in the target tag list based on the playback progress of the media resources, so that the media resource with greater playback progress is ranked higher in the tag list for preferential display.

Fig. 8 is a schematic diagram of a tag list provided by an embodiment of the present disclosure. As shown in the figure, the target tag list includes media resources such as a media resource M1, a media resource M2, and a media resource M3, which are added in sequence, and tag information corresponding to the media resource M1, the media resource M2, and the media resource M3 is tag information #1, tag information #2, and tag information #3, respectively. The target tag list is sorted according to the playback progress in the tag information, for example, the playback progress of the media resource M2 is 90%, which is the most, and it is ranked first in the tag list; the playback progress of the media resource M1 is 80%, which is ranked second in the tag list, and the playback progress of the media resource M3 is 30%, which is ranked third in the tag list, and so on, an unplayed media resource Mn (tag information #n) is ranked at the end of the tag list. After that, a corresponding tag list panel is generated based on the sorting of the respective media resources in the target tag list, and the sorting of (the tag information of) the respective media resources in the tag list panel is consistent with the sorting of the media resources in the corresponding tag list. As shown in the figure, the target tag list panel includes the above tag information #1, tag information #2, tag information #3 and other tag information, where the tag information #1 includes a media identification video_1 and a corresponding playback progress of 80%, the tag information #2 includes a media identification video_2 and a corresponding playback progress of 90%, the tag information #3 includes a media identification video_3 and a corresponding playback progress of 30%, and the tag information #n includes a media identification video_n and a corresponding playback progress of 0%.

The positions of the media resources in the target tag list are sorted in the above manner, so that the unfinished media resources are preferentially displayed in tag lists such as the "favorites" list and the "likes" list, so that when the media resources are subsequently transferred from the tag list to the to-be-played list, the user may quickly locate the unfinished media resources, and the unfinished media resources are preferentially added to the to-be-played list, thereby improving the efficiency of media retrieving and replaying.

Step S205: inserting the first media resource into a target to-be-played list in response to a second selection operation for the first media resource in the tag list panel.

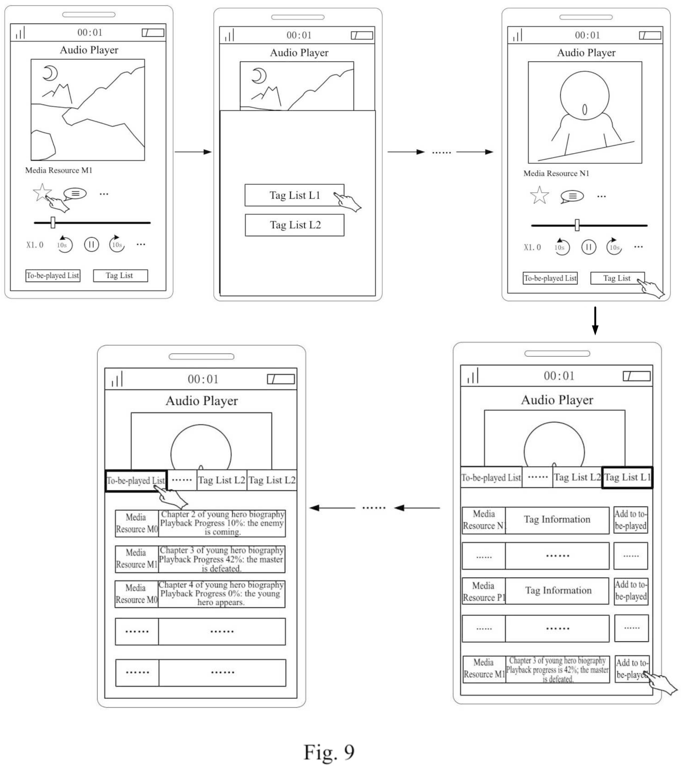

Exemplarily, after the tag list panel is displayed, according to the content of the tag list presented by the tag list panel, the user may select a required first media resource from the tag list panel and transfer it to the target to-be-played list for queuing and playing. Fig. 9 is a schematic diagram of a process of inserting a media resource into a to-be-played list provided by an embodiment of the present disclosure. The above steps are further introduced below in combination with Fig. 9. As shown in Fig. 9, first, the terminal device detects a first trigger operation applied by the user for the first media resource (shown as M1 in the figure), such as a click operation for the add-to-favorites component (represented by a "five-pointed star" in the figure) shown in the figure, and adds the first media resource to a tag list L1. After that, when the user clicks a "tag list" control in the first media interface, multiple tag list panels may be switched and displayed by means of a tab, including a tag list panel corresponding to the tag list L1, a tag list panel corresponding to a tag list L2, etc. After that, by responding to the user's selection operation, the tag list panel corresponding to the tag list L1 is determined as a target tag list panel and displayed. As shown in the figure, multiple media resources are displayed in the tag list panel corresponding to the tag list L1, such as a media resource M1, a media resource N1, and a media resource P1, etc. The tag information includes a media resource name, a playback progress, and a content abstract of a video slice corresponding to the playback progress. Taking the media resource M1 as an example, the media resource name is "Chapter 3 of young hero biography", the playback progress is 42%, and the content abstract of the video slice corresponding to the playback progress is "the master is defeated". After that, in response to the second selection operation for the media resource M1 in the target tag list panel, for example, after clicking a control named "add to to-be-played" on the right side of the media resource M1, the media resource M1 is added to the to-be-played list. After that, the user may click on the tab corresponding to the to-be-played list to display a to-be-played list panel, and in the to-be-played list panel, it may be seen that the media resource M1 is inserted into a second sorting position in the to-be-played list, that is, the target sorting position. Before and after the media resource M1, a media resource M0 and a media resource M2 having content coherence with the media resource M1 are played, respectively. More specifically, a media resource name of the media resource M0 is "Chapter 2 of young hero biography", the playback progress is 10%, and the content abstract of the video slice corresponding to the playback progress is "the enemy is coming". A media resource name of the media resource M2 is "Chapter 4 of young hero biography", the playback progress is 0%, and the content abstract of the video slice corresponding to the playback progress is "the young hero appears". The method for determining the target sorting position has been introduced in previous embodiments and will not be repeated here.

In a possible implementation, before step S205, the method further includes the following steps.

Step S205A: displaying at least two to-be-played list panels, each to-be-played list panel corresponding to a different to-be-played list.

Step S205B: determining a target to-be-played list panel corresponding to a target to-be-played list from the at least two to-be-played list panels.

Step S205C: determining a target sorting position of the first media resource in the target to-be-played list panel.

Further, in another possible implementation, there may be multiple to-be-played lists, and each to-be-played list corresponds to an independent to-be-played list panel. The terminal device may display multiple to-be-played list panels for the user to view and select through a tab or the like. After that, the terminal device selects a target to-be-played list panel corresponding to a target to-be-played list from the multiple to-be-played list panels in response to the user's selection operation, that is, determines the target to-be-played list, determines the target sorting position of the first media resource in the target to-be-played list panel, and performs a subsequent step of adding the first media resource in the tag list to the to-be-played list. In the steps of this implementation, by maintaining multiple to-be-played lists, queue playing of different media resources based on different sorting is realized, thereby improving the flexibility and personalization of queue playing of media resources.

Step S206: playing, in sequence based on positions of respective pieces of tag information presented in the target to-be-played list panel, media resources corresponding to the respective pieces of tag information based on the respective pieces of tag information in response to a first selection operation for the target to-be-played list panel.

Step S207: resuming playback of the first media resource from a playback position corresponding to the playback progress represented by the tag information of the first media resource according to the tag information of the first media resource in response to playing to the first media resource based on the target to-be-played list.

Further, the first selection operation for the target to-be-played list panel is a user operation of determining the target to-be-played list panel from multiple to-be-played list panels, and the terminal device determines the target to-be-played list panel and the target to-be-played list based on the first selection operation. After that, the target application plays the media resources in the target to-be-played list sequentially based on the target to-be-played list, thereby realizing continuous playing of multimedia resources. When playing to the first media resource, the tag information of the first media resource is acquired, and the first media resource is played continuously from the playback progress indicated by the tag information, thereby realizing retrieving and replaying of the first media resource. At the same time, based on the previous steps, the media resources in the target to-be-played list are sorted based on the content features, so that continuous playing of different media resources with content coherence may be realized. In combination with the feature that the playback progress corresponding to the key content may be indicated by the tag information, the embodiments may further realize continuous playing of key content of different media resources with content coherence. For example, for the application scenario of audiobook playing, through the embodiments, the audiobook is marked, the tag information is generated, and the audiobook is inserted into the to-be-played list for sequential playing, so that the effect of cutting non-main content (such as advertisement and previous episode recap) at the beginning of different chapters in the same audiobook work and playing them continuously through the to-be-played list may be realized, thereby improving the effect of continuous playing of media resources and improving user experience.

In the embodiments, the implementation of steps S201-S202 is the same as the implementation of steps S101-S102 in the embodiment shown in Fig. 2 of the present disclosure, which will not be repeated here.

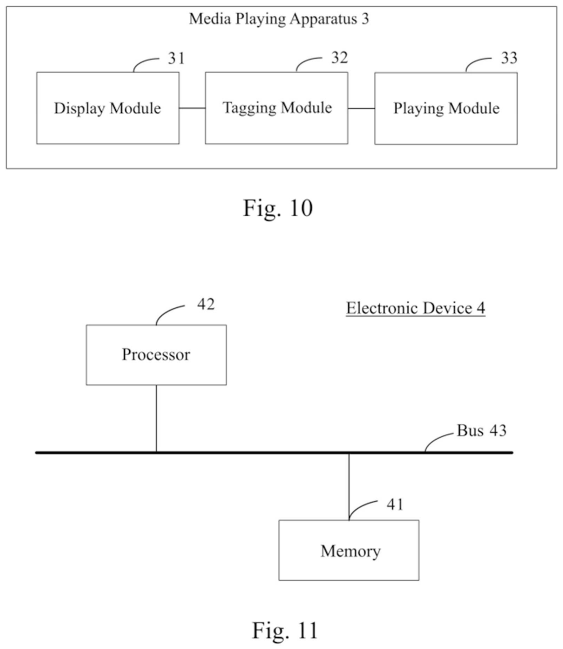

Corresponding to the media playing method of the above embodiments, Fig. 10 is a structural block diagram of a media playing apparatus provided by an embodiment of the present disclosure. The method introduced in the above embodiments may be executed by the media playing apparatus, which may be implemented by software and/or hardware, and the apparatus may be integrated in an electronic device with a certain data processing function. The electronic device may include, but is not limited to, a mobile terminal with big data processing capability, and a fixed terminal with big data processing capability, such as a desktop computer and a supercomputer.

For convenience of explanation, only parts related to the embodiments of the present disclosure are shown. Referring to Fig. 10, the media playing apparatus 3 includes: a display module 31, configured to present or play a first media resource based on a first media interface; a tagging module 32, configured to generate tag information of the first media resource in response to a first trigger operation for the first media resource, the tag information being used to represent a media resource identification of a media resource and playback progress of the media resource when the tag information is generated; and a playing module 33, configured to insert the first media resource into a to-be-played list, and play the first media resource continuously from playback progress corresponding to the tag information of the first media resource according to the tag information of the first media resource when playing to the first media resource based on the to-be-played list.

For example, the display module 31 is further configured to display a to-be-played list panel, the to-be-played list panel being used to present tag information of media resources in the to-be-played list.

For example, the playing module 33 is further configured to, based on positions of respective pieces of tag information presented in the to-be-played list panel, play, in sequence, media resources corresponding to the respective pieces of tag information based on the respective pieces of tag information.

For example, the playing module 33 is further configured to adjust a position of the tag information of the first media resource in the to-be-played list panel in response to a second trigger operation.

According to one or more embodiments of the present disclosure, after the first media resource is inserted into the to-be-played list, the display module 31 is further configured to refresh the to-be-played list panel to display the tag information of the first media resource at a target sorting position in the to-be-played list panel.

According to one or more embodiments of the present disclosure, before the to-be-played list panel is refreshed to display the tag information of the first media resource at the target sorting position in the to-be-played list panel, the playing module 33 is further configured to: acquire first content features of media resources corresponding to respective pieces of tag information in the to-be-played list and a second content feature of the first media resource; and determine the target sorting position according to the second content feature and the first content features, the second content feature of the first media resource having feature similarity and/or feature continuity with a first content feature of a media resource located at a position adjacent to the target sorting position.

According to one or more embodiments of the present disclosure, when displaying the to-be-played list panel, the display module 31 is further configured to display at least two to-be-played list panels, each to-be-played list panel corresponding to a different to-be-played list; and when playing, in sequence based on the positions of the respective pieces of tag information presented in the to-be-played list panel, the media resources corresponding to the respective pieces of tag information based on the respective pieces of tag information, the playing module 33 is further configured to: play, in sequence based on the positions of the respective pieces of tag information presented in the to-be-played list panel, the media resources corresponding to the respective pieces of tag information based on the respective pieces of tag information in response to a first selection operation for a target to-be-played list panel.

According to one or more embodiments of the present disclosure, when inserting the first media resource into the to-be-played list, the playing module 33 is further configured to: determine a corresponding target tag list according to a target control type corresponding to the first trigger operation, and insert the first media resource into the target tag list; and display a target tag list panel corresponding to the target tag list, and insert the first media resource into the to-be-played list in response to a second selection operation for the first media resource in the tag list panel.

According to one or more embodiments of the present disclosure, the playing module 33 is further configured to: acquire playback progress of respective media resources in the target tag list; and arrange positions of the respective media resources in the target tag list according to the playback progress of the respective media resources in the target tag list, a corresponding media resource being ranked higher in the target tag list as the playback progress increases.

According to one or more embodiments of the present disclosure, the tag information is also used to represent abstract information of a corresponding media resource; and when generating the tag information of the first media resource in response to the first trigger operation for the first media resource, the tagging module is further configured to: acquire a current first playback progress of the first media resource in response to the first trigger operation for the first media resource; acquire a media resource content slice corresponding to the first playback progress in the first media resource; and perform semantic understanding on the media resource content slice corresponding to the first playback progress to generate the abstract information, and generate the tag information according to the abstract information.

According to one or more embodiments of the present disclosure, after the first media resource is presented or played based on the first media interface, the display module 31 is further configured to: display prompt information in the first media interface when the first media resource is played to key playback progress, the prompt information being used to instruct a user to apply the first trigger operation, and the key playback progress being used to indicate a start playback position corresponding to key content of the first media resource or a playback position corresponding to a boundary point between two independent segments of content in the first media resource.

According to one or more embodiments of the present disclosure, the display module 31 is further configured to: acquire a real-time content feature corresponding to audio and video decoding data after a current playback progress of the first media resource in real time; and determine the key playback progress of the first media resource according to the real-time content feature.

The display module 31, the tagging module 32, and the playing module 33 are connected in sequence. The media playing apparatus 3 provided in the embodiments may execute the technical solutions of the above method embodiments, and the implementation principles and technical effects thereof are similar, which will not be repeated here in the embodiments.

Fig. 11 is a schematic structural diagram of an electronic device provided by an embodiment of the present disclosure. As shown in Fig. 11, the electronic device 4 includes: a processor 41, and a memory 42 communicatively connected to the processor 41; the memory 42 stores a computer-executable instruction; and the processor 41 executes the computer-executable instruction stored in the memory 42 to implement the media playing method in the embodiments shown in Fig. 2-Fig. 9.

Optionally, the processor 41 and the memory 42 are connected through a bus 43.

The relevant description may be understood by referring to the relevant descriptions and effects corresponding to the steps in the embodiments corresponding to Fig. 2-Fig. 9, and details are not repeated here.

An embodiment of the present disclosure provides a computer-readable storage medium, where the computer-readable storage medium stores a computer-executable instruction, and the computer-executable instruction is used to implement the media playing method provided by any one of the embodiments corresponding to Fig. 2-Fig. 9 of the present disclosure when being executed by a processor.

An embodiment of the present disclosure provides a computer program product, including a computer program, and the media playing method provided by any one of the embodiments corresponding to Fig. 2-Fig. 9 of the present disclosure is implemented when the computer program is executed by a processor.

In order to implement the above embodiments, an embodiment of the present disclosure further provides an electronic device.

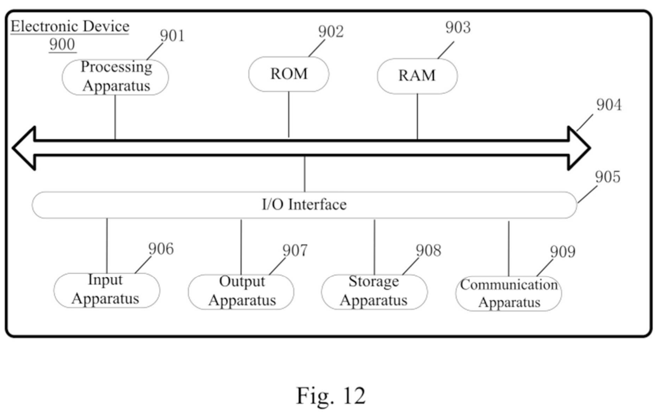

Reference is made to Fig. 12, which shows a schematic structural diagram of an electronic device 900 suitable for implementing the embodiments of the present disclosure, and the electronic device 900 may be a terminal device or a server. The terminal device may include, but is not limited to, a mobile terminal such as a mobile phone, a laptop, a digital broadcast receiver, a personal digital assistant (abbreviated as PDA), a tablet computer, a portable media player (abbreviated as PMP), a vehicle-mounted terminal (such as a vehicle-mounted navigation terminal), etc., and a fixed terminal such as a digital TV, a desktop computer, etc. The electronic device shown in Fig. 12 is only an example, and should not impose any limitation on the function and scope of use of the embodiments of the present disclosure.

As shown in Fig. 12, the electronic device 900 may include a processing apparatus (such as a central processing unit, a graphics processor, etc.) 901, which may perform various appropriate actions and processing according to a program stored in a read-only memory (abbreviated as ROM) 902 or a program loaded into a random access memory (abbreviated as RAM) 903 from a storage apparatus 908. The RAM 903 further stores various programs and data required for the operation of the electronic device 900. The processing apparatus 901, the ROM 902, and the RAM 903 are connected to each other through a bus 904. An input/output (I/O) interface 905 is also connected to the bus 904.

Usually, the following apparatuses may be connected to the I/O interface 905: an input apparatus 906 including, for example, a touch screen, a touchpad, a keyboard, a mouse, a camera, a microphone, an accelerometer, a gyroscope, etc.; an output apparatus 907 including, for example, a liquid crystal display (abbreviated as LCD), a speaker, a vibrator, etc.; a storage apparatus 908 including, for example, a magnetic tape, a hard disk, etc.; and a communication apparatus 909. The communication apparatus 909 may allow the electronic device 900 to perform wireless or wired communication with other devices to exchange data. Although Fig. 12 shows the electronic device 900 with various apparatuses, it should be understood that it is not required to implement or have all the apparatuses shown. More or fewer apparatuses may be implemented or provided alternatively.

In particular, according to the embodiments of the present disclosure, the process described above with reference to the flowcharts may be implemented as computer software programs. For example, the embodiments of the present disclosure include a computer program product, which includes a computer program carried on a computer-readable medium, where the computer program contains program codes for performing the method shown in the flowcharts. In such an embodiment, the computer program may be downloaded and installed from a network through the communication apparatus 909, or installed from the storage apparatus 908, or installed from the ROM 902. When the computer program is executed by the processing apparatus 901, the above-mentioned functions defined in the method of the embodiment of the present disclosure are executed.

It should be noted that the above-mentioned computer-readable medium in the present disclosure may be a computer-readable signal medium, a computer-readable storage medium, or any combination of the two. The computer-readable storage medium may be, for example, but not limited to, an electrical, magnetic, optical, electromagnetic, infrared, or semiconductor system, apparatus, or device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that contains or stores a program, which may be used by or in combination with an instruction execution system, apparatus, or device. In the present disclosure, the computer-readable signal medium may include a data signal propagated in a baseband or as a part of a carrier wave, and computer-readable program codes are carried therein. This propagated data signal may adopt multiple forms, including but not limited to an electromagnetic signal, an optical signal, or any suitable combination of the above. The computer-readable signal medium may also be any computer-readable medium other than the computer-readable storage medium, and the computer-readable signal medium may send, propagate, or transmit the program used by or in combination with the instruction execution system, apparatus, or device. The program codes contained on the computer-readable medium may be transmitted by any suitable medium, including but not limited to: a wire, an optical cable, a radio frequency (RF), etc., or any suitable combination of the above.

The above-mentioned computer-readable medium may be included in the above-mentioned electronic device, or may exist alone without being assembled into the electronic device.

The above computer-readable medium carries one or more programs, which, when executed by the electronic device, cause the electronic device to perform the method shown in the above embodiments.

The computer program codes used to perform the operations of the present disclosure may be written in one or more programming languages or a combination thereof, the above programming languages including object-oriented programming languages such as Java, Smalltalk, and C++, as well as conventional procedural programming languages such as "C" language or similar programming languages. The program codes may be executed entirely on a user's computer, partly on the user's computer, as a stand-alone software package, partly on the user's computer and partly on a remote computer, or entirely on the remote computer or server. In the case of involving a remote computer, the remote computer may be connected to the user's computer through any kind of network, including a local area network (Local Area Network, LAN for short) or a wide area network (Wide Area Network, WAN for short), or it may be connected to an external computer (for example, connected by using Internet provided by an Internet service provider).

The flowcharts and block diagrams in the drawings illustrate the possibly implemented architectures, functions, and operations of the system, method, and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units or modules described in the embodiments of the present disclosure may be implemented in a software manner or in a hardware manner. Among them, the name of a unit or module does not constitute a limitation on the unit itself under certain circumstances.

The functions described above herein may be at least partially performed by one or more hardware logic components. For example, non-restrictively, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium would include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

In a first aspect, according to one or more embodiments of the present disclosure, a media playing method is provided, including: presenting or playing a first media resource based on a first media interface; generating tag information of the first media resource in response to a first trigger operation for the first media resource, the tag information being used to represent a media resource identification of a media resource and playback progress of the media resource when the tag information is generated; and inserting the first media resource into a to-be-played list, and resuming playback of the first media resource from a playback position corresponding to the playback progress represented by the tag information of the first media resource in response to playing to the first media resource based on the to-be-played list.

According to one or more embodiments of the present disclosure, the method further includes at least one of the following: displaying a to-be-played list panel, the to-be-played list panel being used to present tag information of media resources in the to-be-played list; based on positions of respective pieces of tag information presented in the to-be-played list panel, playing, in sequence, media resources corresponding to the respective pieces of tag information based on the respective pieces of tag information; and adjusting a position of the tag information of the first media resource in the to-be-played list panel in response to a second trigger operation.

According to one or more embodiments of the present disclosure, after the first media resource is inserted into the to-be-played list, the method further includes: refreshing the to-be-played list panel to display the tag information of the first media resource at a target sorting position in the to-be-played list panel.

According to one or more embodiments of the present disclosure, before the to-be-played list panel is refreshed to display the tag information of the first media resource at the target sorting position in the to-be-played list panel, the method further includes: acquiring first content features of media resources corresponding to respective pieces of tag information in the to-be-played list and a second content feature of the first media resource; and determining the target sorting position according to the second content feature and the first content features, the second content feature of the first media resource having feature similarity and/or feature continuity with a first content feature of a media resource located at a position adjacent to the target sorting position.

According to one or more embodiments of the present disclosure, the displaying the to-be-played list panel includes: displaying at least two to-be-played list panels, each to-be-played list panel corresponding to a different to-be-played list; and the playing, in sequence based on the positions of the respective pieces of tag information presented in the to-be-played list panel, the media resources corresponding to the respective pieces of tag information based on the respective pieces of tag information includes: playing, in sequence based on the positions of the respective pieces of tag information presented in the to-be-played list panel, the media resources corresponding to the respective pieces of tag information based on the respective pieces of tag information in response to a first selection operation for a target to-be-played list panel.

According to one or more embodiments of the present disclosure, the inserting the first media resource into the to-be-played list includes: determining a corresponding target tag list according to a target control type corresponding to the first trigger operation, and inserting the first media resource into the target tag list; and displaying a target tag list panel corresponding to the target tag list, and inserting the first media resource into the to-be-played list in response to a second selection operation for the first media resource in the tag list panel.

According to one or more embodiments of the present disclosure, the method further includes: acquiring playback progress of respective media resources in the target tag list; and arranging positions of the respective media resources in the target tag list according to the playback progress of the respective media resources in the target tag list, and the greater the playback progress, the higher a corresponding media resource is ranked in the target tag list.

According to one or more embodiments of the present disclosure, the tag information is also used to represent abstract information of a corresponding media resource; and the generating the tag information of the first media resource in response to the first trigger operation for the first media resource includes: acquiring a current first playback progress of the first media resource in response to the first trigger operation for the first media resource; acquiring a media resource content slice corresponding to the first playback progress in the first media resource; and performing semantic understanding on the media resource content slice corresponding to the first playback progress to generate the abstract information, and generating the tag information according to the abstract information.

According to one or more embodiments of the present disclosure, after the first media resource is presented or played based on the first media interface, the method further includes: displaying prompt information in the first media interface when the first media resource is played to key playback progress, the prompt information being used to instruct a user to apply the first trigger operation, and the key playback progress being used to indicate a start playback position corresponding to key content of the first media resource or a playback position corresponding to a boundary point between two independent segments of content in the first media resource.

According to one or more embodiments of the present disclosure, the method further includes: acquiring a real-time content feature corresponding to audio and video decoding data after a current playback progress of the first media resource in real time; and determining the key playback progress of the first media resource according to the real-time content feature.

In a second aspect, according to one or more embodiments of the present disclosure, a media playing apparatus is provided, including: a display module, configured to present or play a first media resource based on a first media interface; a tagging module, configured to generate tag information of the first media resource in response to a first trigger operation for the first media resource, the tag information being used to represent a media resource identification of a media resource and playback progress of the media resource when the tag information is generated; and a playing module, configured to insert the first media resource into a to-be-played list, and play the first media resource continuously from playback progress corresponding to the tag information of the first media resource according to the tag information of the first media resource when playing to the first media resource based on the to-be-played list.

According to one or more embodiments of the present disclosure, the display module is further configured to display a to-be-played list panel, the to-be-played list panel being used to present tag information of media resources in the to-be-played list; the playing module is further configured to, based on positions of respective pieces of tag information presented in the to-be-played list panel, play, in sequence, media resources corresponding to the respective pieces of tag information based on the respective pieces of tag information; and the playing module is further configured to adjust a position of the tag information of the first media resource in the to-be-played list panel in response to a second trigger operation.

According to one or more embodiments of the present disclosure, after the first media resource is inserted into the to-be-played list, the display module is further configured to refresh the to-be-played list panel to display the tag information of the first media resource at a target sorting position in the to-be-played list panel.

According to one or more embodiments of the present disclosure, before the to-be-played list panel is refreshed to display the tag information of the first media resource at the target sorting position in the to-be-played list panel, the playing module is further configured to: acquire first content features of media resources corresponding to respective pieces of tag information in the to-be-played list and a second content feature of the first media resource; and determine the target sorting position according to the second content feature and the first content features, the second content feature of the first media resource having feature similarity and/or feature continuity with a first content feature of a media resource located at a position adjacent to the target sorting position.

According to one or more embodiments of the present disclosure, when displaying the to-be-played list panel, the display module is further configured to display at least two to-be-played list panels, each to-be-played list panel corresponding to a different to-be-played list; and when playing, in sequence based on the positions of the respective pieces of tag information presented in the to-be-played list panel, the media resources corresponding to the respective pieces of tag information based on the respective pieces of tag information, the playing module is further configured to: play, in sequence based on the positions of the respective pieces of tag information presented in the to-be-played list panel, the media resources corresponding to the respective pieces of tag information based on the respective pieces of tag information in response to a first selection operation for a target to-be-played list panel.

According to one or more embodiments of the present disclosure, when inserting the first media resource into the to-be-played list, the playing module is further configured to: determine a corresponding target tag list according to a target control type corresponding to the first trigger operation, and insert the first media resource into the target tag list; and display a target tag list panel corresponding to the target tag list, and insert the first media resource into the to-be-played list in response to a second selection operation for the first media resource in the tag list panel.

According to one or more embodiments of the present disclosure, the playing module is further configured to: acquire playback progress of respective media resources in the target tag list; and arrange positions of the respective media resources in the target tag list according to the playback progress of the respective media resources in the target tag list, a corresponding media resource being ranked higher in the target tag list as the playback progress increases.

According to one or more embodiments of the present disclosure, the tag information is also used to represent abstract information of a corresponding media resource; and when generating the tag information of the first media resource in response to the first trigger operation for the first media resource, the tagging module is further configured to: acquire a current first playback progress of the first media resource in response to the first trigger operation for the first media resource; acquire a media resource content slice corresponding to the first playback progress in the first media resource; and perform semantic understanding on the media resource content slice corresponding to the first playback progress to generate the abstract information, and generate the tag information according to the abstract information.

According to one or more embodiments of the present disclosure, after the first media resource is presented or played based on the first media interface, the display module is further configured to: display prompt information in the first media interface when the first media resource is played to key playback progress, the prompt information being used to instruct a user to apply the first trigger operation, and the key playback progress being used to indicate a start playback position corresponding to key content of the first media resource or a playback position corresponding to a boundary point between two independent segments of content in the first media resource.

According to one or more embodiments of the present disclosure, the display module is further configured to: acquire a real-time content feature corresponding to audio and video decoding data after a current playback progress of the first media resource in real time; and determine the key playback progress of the first media resource according to the real-time content feature.

In a third aspect, according to one or more embodiments of the present disclosure, an electronic device is provided, including: at least one processor and a memory; the memory stores a computer-executable instruction; and the at least one processor executes the computer-executable instruction stored in the memory to cause the at least one processor to execute the media playing method according to the above first aspect and various possible designs of the first aspect.

In a fourth aspect, according to one or more embodiments of the present disclosure, a computer-readable storage medium is provided, where the computer-readable storage medium stores a computer-executable instruction, and when a processor executes the computer-executable instruction, the media playing method according to the above first aspect and various possible designs of the first aspect is implemented.

In a fifth aspect, according to one or more embodiments of the present disclosure, a computer program product is provided, including a computer program, and when the computer program is executed by a processor, the media playing method according to the above first aspect and various possible designs of the first aspect is implemented.

The above description is only preferred embodiments of the present disclosure and an explanation of the technical principles employed. Those skilled in the art should understand that the scope of disclosure involved in the present disclosure is not limited to the technical solutions formed by the specific combination of the above technical features, and should also cover, without departing from the above disclosed concept, other technical solutions formed by any combination of the above technical features or their equivalent features. For example, a technical solution formed by replacing the above features with technical features with similar functions disclosed in the present disclosure (but not limited to).

Additionally, although operations are depicted in a particular order, it should not be understood that these operations are required to be performed in a specific order as shown or in a sequential order. Under certain circumstances, multitasking and parallel processing may be advantageous. Likewise, although several specific implementation details are included in the above discussion, these should not be interpreted as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. Conversely, the specific features and actions described above are merely exemplary forms for implementing the claims.

## Claims

1. A media playing method, comprising:
presenting or playing a first media resource based on a first media interface;
generating tag information of the first media resource in response to a first trigger operation for the first media resource, the tag information being used to represent a playback progress of the first media resource when the tag information is generated; and
inserting the first media resource into a to-be-played list, and resuming playback of the first media resource from a playback position corresponding to the playback progress represented by the tag information of the first media resource in response to playing to the first media resource based on the to-be-played list.

2. The method of claim 1, further comprising:
displaying a to-be-played list panel configured to present tag information of media resources in the to-be-played list; and
display the tag information of the first media resource at a target sorting position in the to-be-played list panel.

3. The method of claim 2, further comprising:
adjusting a position of the tag information of the first media resource in the to-be-played list panel in response to a second trigger operation.

4. The method of claim 2 or 3, wherein the refreshing the to-be-played list panel to display the tag information of the first media resource at a target sorting position in the to-be-played list panel comprises:
acquiring first content features of media resources corresponding to respective pieces of tag information in the to-be-played list and a second content feature of the first media resource; and
determining the target sorting position according to the second content feature and the first content features, the second content feature of the first media resource having feature similarity and/or feature continuity with a first content feature of a media resource located at a position adjacent to the target sorting position.

5. The method of claim 1, further comprising:
displaying a to-be-played list panel, the to-be-played list panel being used to present tag information of media resources in the to-be-played list; and
sequentially playing the media resources corresponding to respective pieces of tag information according to positions of the respective pieces of tag information presented in the to-be-played list panel.

6. The method of claim 5, wherein the displaying a to-be-played list panel comprises:
displaying at least two to-be-played list panels respectively corresponding to different to-be-played lists;
the sequentially playing the media resources corresponding to respective pieces of tag information according to positions of the respective pieces of tag information presented in the to-be-played list panel comprises:
sequentially playing the media resources corresponding to respective pieces of tag information according to positions of the tag information presented in a target to-be-played list panel in response to a first selection operation for the target to-be-played list panel.

7. The method of any one of claims 1-6, the inserting the first media resource into a to-be-played list comprises:
determining a corresponding target tag list according to a target control type corresponding to the first trigger operation, and inserting the first media resource into the target tag list; and
displaying a target tag list panel corresponding to the target tag list, and inserting the first media resource into the to-be-played list in response to a second selection operation for the first media resource in the target tag list panel.

8. The method of claim 7, wherein the inserting the first media resource into the target tag list comprises:
acquiring playback progress of respective media resources in the target tag list; and
arranging positions of the respective media resources in the target tag list according to the playback progress of the respective media resources, wherein the greater the playback progress, the higher a corresponding media resource is ranked in the target tag list.

9. The method of any one of claims 1-8, wherein the tag information is also used to represent abstract information of the first media resource; and
the generating the tag information of the first media resource in response to a first trigger operation for the first media resource comprises:
acquiring a current first playback progress of the first media resource in response to the first trigger operation for the first media resource;
acquiring a media resource content slice corresponding to the current first playback progress in the first media resource; and
performing semantic understanding on the media resource content slice corresponding to the first current playback progress to generate the abstract information, and generating the tag information according to the abstract information.

10. The method of any one of claims 1-9, further comprising:
displaying prompt information in the first media interface when the first media resource is played to a key playback progress, wherein the prompt information is used to instruct a user to apply the first trigger operation, and the key playback progress is used to indicate a start playback position corresponding to key content of the first media resource or a playback position corresponding to a boundary point between two independent segments of content in the first media resource.

11. The method of claim 10, further comprising:
acquiring a real-time content feature corresponding to audio and video decoding data after a current playback progress of the first media resource in real time; and
determining the key playback progress of the first media resource according to the real-time content feature.

12. The method of any one of claims 1-11, wherein the tag information is further used to represent a media resource identification of the first media resource.

13. An electronic device, comprising:
a processor and a memory,
wherein the memory stores a computer-executable instruction which, when executed by the processor, causes the media playing method according to any one of claims 1-12 to be performed.

14. A computer-readable storage medium, storing a computer-executable instruction which, when executed by a processor, causes the media playing method according to any one of claims 1-13 to be performed.
